(19) Europäisches Patentamt / European Patent Office / Office européen des brevets

(11) **EP 3 561 626 A1**

(12) **DEMANDE DE BREVET EUROPEEN**

(43) Date de publication:
**30.10.2019 Bulletin 2019/44**

(21) Numéro de dépôt: **19168157.6**

(22) Date de dépôt: **09.04.2019**

(51) Int Cl.:
**G05D 1/00** (2006.01)  **G01C 21/20** (2006.01)
**G05D 1/10** (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.04.2018 FR 1853619**

(71) Demandeur: **Airbus Operations S.A.S.
31060 Toulouse (FR)**

(72) Inventeurs:
• **PASTRE, Thomas
31060 TOULOUSE Cedex 9 (FR)**
• **ARNOUX, Jérôme
31060 TOULOUSE Cedex 9 (FR)**

(74) Mandataire: **Sarraméa, Claude
Airbus Operations (S.A.S)
XIF - M0101/1
316, route de Bayonne
31060 Toulouse Cedex (FR)**

(54) **PROCÉDÉ ET DISPOSITIF D'AIDE AU PILOTAGE D'UN AÉRONEF POUR RESPECTER UNE CONTRAINTE D'HEURE DE PASSAGE**

(57) Le procédé d'aide au pilotage d'un aéronef (1) pour respecter une contrainte d'heure de passage (RTA) en un point de passage lors d'un vol selon un plan de vol prédéterminé comprenant un profil nominal de vitesse (20) comportant au moins deux segments de vol (S1 ... S5) comprend les étapes :

a) détermination d'un profil effectif de vitesse (21) de l'aéronef, comprenant les sous-étapes suivantes :

a3) calcul, pour chaque segment du profil nominal de vitesse, d'un terme correctif fonction d'un coefficient de correction commun à tous les segments (S1 ... S5) du profil nominal de vitesse (20) ; et

a4) calcul, pour chaque segment du profil effectif de vitesse (21), d'une vitesse de consigne (Vtgt) égale à la somme d'une vitesse nominale (Vnom) du profil nominal de vitesse (20) et du terme correctif,

b) commande d'un calculateur (18) de guidage de l'aéronef selon le profil effectif de vitesse (21).

Fig. 5

EP 3 561 626 A1

## Description

La présente invention concerne un procédé et un système d'aide au pilotage d'un aéronef, qui sont destinés à aider au respect d'une contrainte d'heure de passage en un point de passage, lors d'un vol de l'aéronef.

Le pilotage des aéronefs, en particulier des avions de transport civils ou militaires, est généralement réalisé le long d'un plan de vol comportant un ensemble de points de passage (« waypoints » en anglais) définis dans l'espace tridimensionnel. L'aéronef doit être guidé le long du plan de vol en respectant une marge maximale d'erreur de position par rapport à des segments reliant les différents points de passage. De plus en plus souvent, notamment dans les zones à forte densité de trafic, certains des points de passage du plan de vol comportent une contrainte d'heure de passage généralement appelée RTA (« Required Time of Arrival » en anglais) imposée par le contrôle aérien afin de garantir une séparation satisfaisante des différents aéronefs. Dans un tel cas, l'aéronef doit être guidé le long du plan de vol en respectant en outre une marge maximale d'erreur temporelle par rapport aux contraintes RTA des points de passage comportant une telle contrainte.

De façon usuelle, avant le vol, la vitesse de l'aéronef est généralement planifiée sous la forme d'un indice de coût (« cost index » en anglais). Cet indice de coût correspond usuellement à un coefficient compris entre 0 et 100, tel que lorsque ce coefficient est égal à 100, la vitesse planifiée correspond à une vitesse maximale opérationnelle Vmax de l'aéronef et lorsque ce coefficient est égal à 0, la vitesse planifiée correspond à une vitesse minimale opérationnelle Vmin de l'aéronef. Lorsque l'indice de coût est égal à une valeur k comprise entre 0 et 100, la vitesse planifiée est égale à :

$$\text{Vmin} + k \, (\text{Vmax} - \text{Vmin}) \, / \, 100.$$

Avant le vol, l'indice de coût est entré par un pilote de l'aéronef dans un calculateur de gestion du vol de l'aéronef, par exemple un calculateur de type FMS (« Flight Management System » en anglais). Pendant le vol, le calculateur de gestion du vol commande un calculateur de guidage de l'aéronef en fonction du plan de vol et de l'indice de coût. Si le pilote reçoit du contrôle aérien une contrainte de type RTA en un point de passage du plan de vol, il entre cette contrainte dans le calculateur de gestion du vol. Le calculateur de gestion du vol calcule alors une heure estimée de passage de l'aéronef à ce point de passage en tenant compte de la valeur courante de l'indice de coût. Cette heure estimée de passage est généralement appelée ETA (« Estimated Time of Arrival » en anglais). Le document US5.121.325 décrit un système permettant de déterminer une heure estimée de passage d'un aéronef en un point particulier. Le calculateur de gestion du vol compare cette heure estimée de passage ETA avec la contrainte RTA. Si l'écart entre les heures ETA et RTA est supérieur à un seuil prédéterminé de durée (par exemple 10 secondes), le calculateur de gestion du vol calcule une nouvelle valeur de l'indice de coût permettant de réduire l'écart à une valeur inférieure à ce seuil prédéterminé de durée, puis il commande le calculateur de guidage en fonction de ladite nouvelle valeur de l'indice de coût.

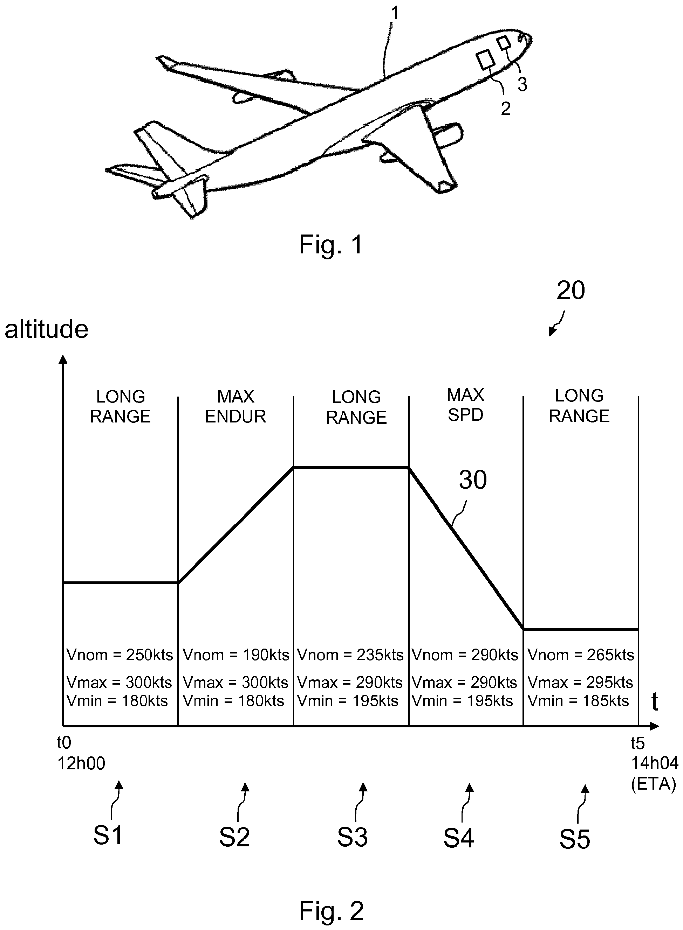

Pour certains vols d'un aéronef, un profil nominal de vitesse comprenant plusieurs segments de vol est défini avant le vol de l'aéronef. Une vitesse nominale de vol de l'aéronef est définie pour chaque segment de vol. Une vitesse minimale et une vitesse maximale de vol de l'aéronef sont également définies pour chaque segment de vol de l'aéronef. Un tel profil de vitesse permet de définir différentes stratégies de vol pour les différents segments de vol. Un exemple de plan de vol comportant un tel profil nominal de vitesse 20 est illustré sur la figure 2. Ce profil nominal de vitesse comprend cinq segments S1 à S5 pour lesquels l'altitude planifiée 30 de l'aéronef est illustrée par la figure. Le segment S1, intitulé « LONG RANGE » est un segment de vol de croisière à altitude constante. La vitesse nominale définie pour ce segment est de 250kts (noeuds), soit environ 463km/h. Cette vitesse est proche du milieu de l'intervalle de vitesses admissibles comprises entre Vmin = 180kts (environ 333km/h) et Vmax = 300kts (environ 555km/h), ce qui permet d'optimiser la consommation de carburant. Le segment S2, intitulé « MAX ENDUR » est un segment de vol en montée. La vitesse nominale définie pour ce segment est de 190kts (noeuds), soit environ 352km/h. Cette vitesse est située plutôt dans la partie inférieure de l'intervalle de vitesses admissibles comprises entre Vmin = 180kts (environ 333km/h) et Vmax = 300kts (environ 555km/h) de façon à permettre à l'aéronef de se maintenir le plus longtemps possible en vol et pour garantir un taux convenable de montée. Le segment S3, intitulé « LONG RANGE » est un autre segment de vol de croisière à altitude constante. La vitesse nominale définie pour ce segment est de 235kts (noeuds), soit environ 435km/h. Cette vitesse est proche du milieu de l'intervalle de vitesses admissibles comprises entre Vmin = 195kts (environ 361km/h) et Vmax = 290kts (environ 537km/h), ce qui permet d'optimiser la consommation de carburant. Le segment S4, intitulé « MAX SPD » est un segment de vol en descente. La vitesse nominale définie pour ce segment est de 290kts (noeuds), soit environ 546km/h. Cette vitesse correspond à la borne supérieure de l'intervalle de vitesses admissibles comprises entre Vmin = 195kts (environ 361km/h) et Vmax = 290kts (environ 546km/h) de façon à garantir un taux convenable de descente. Le segment S5, intitulé « LONG RANGE » est également un segment de vol de croisière à altitude constante. La vitesse nominale définie pour ce segment est de 265kts (noeuds), soit environ 490km/h. Cette vitesse est proche du milieu de l'intervalle de vitesses admissibles comprises entre Vmin = 195kts (environ 361km/h) et Vmax = 295kts (environ 546km/h), ce qui permet d'optimiser la consommation de carburant.

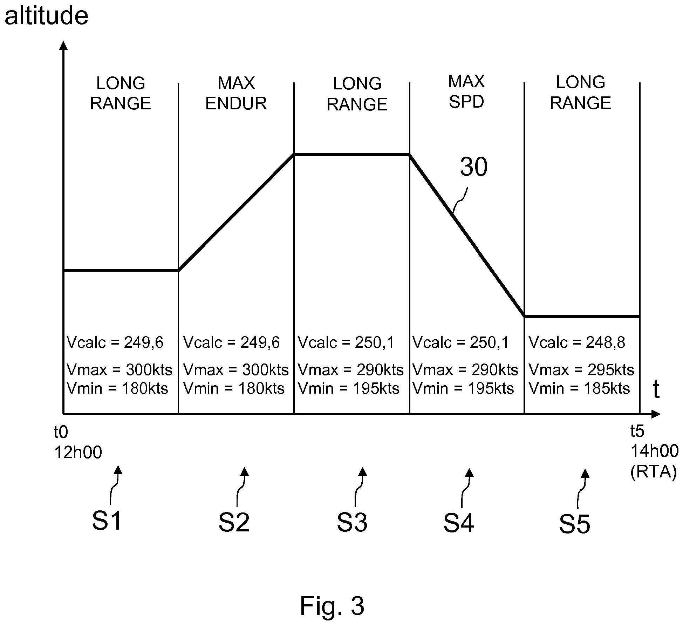

Lorsque le calculateur de gestion de vol commande le guidage de l'aéronef en fonction d'un plan de vol comportant un tel profil nominal de vitesse, si le pilote de l'aéronef reçoit une contrainte RTA provenant du contrôle aérien et entre cette contrainte RTA dans le calculateur de gestion de vol, alors le calculateur de gestion de vol modifie le profil de vitesse comme indiqué précédemment, c'est-à-dire en calculant un indice de coût pour l'ensemble du plan de vol. Cela a pour effet de lisser les variations de vitesse entre les différents segments du plan de vol et par conséquent, le plan de vol modifié pour prendre en compte la contrainte RTA ne tient plus compte de la stratégie choisie en termes de profil de vitesse. Ainsi, dans un exemple particulier, pour le profil de vitesse illustré par la figure 2 et pour un instant t0 correspondant au début du segment S1 égal à 12h00, en considérant que les différents segments S1 à S5 ont tous une longueur de 100Nm (environ 185,2km), l'instant t5 correspondant au passage de l'aéronef à la fin du segment S5 est par exemple égal à 14h04. Dans l'hypothèse où le pilote reçoit et entre dans le calculateur de gestion de vol une contrainte RTA égale à 14h00 pour le point de passage à la fin du segment S5, le calculateur de gestion de vol calcule un indice de coût permettant d'arriver à ce point de passage à l'instant t5 égal à 14h00. Le plan de vol ainsi modifié est illustré sur la figure 3. Dans cet exemple particulier, l'indice de coût calculé par le calculateur de gestion de vol serait de 58. Il en résulte que les vitesses calculées Vcalc par le calculateur de vol pour respecter la contrainte RTA seraient égales à Vcalc = Vmin + 0,58 (Vmax - Vmin) sur chaque segment. Une fois calculé l'indice de coût, ces valeurs de vitesses calculées ne dépendent que des valeurs limites Vmax et Vmin pour chaque segment. Elles seraient égales à :

pour le segment S1 : Vcalc = 249,6kts
pour le segment S2 : Vcalc = 249,6kts
pour le segment S3 : Vcalc = 250,1kts
pour le segment S4 : Vcalc = 250,1kts
pour le segment S5 : Vcalc = 248,6kts

Les différences entre les vitesses calculées correspondant aux différents segments sont très fortement réduites par rapport aux différences entre les vitesses nominales correspondant à ces différents segments. Par conséquent, le profil de vitesse du plan de vol modifié pour respecter la contrainte RTA est complètement différent du profil de vitesse nominal. Or, il serait souhaitable que le profil de vitesse du plan de vol modifié respecte les différentes stratégies de vol définies pour les différents segments du plan de vol.

Le document EP3232292A1 divulgue un procédé d'aide au pilotage d'un aéronef en vue de respecter une contrainte RTA en un point de passage lors d'un vol de l'aéronef selon un plan de vol prédéterminé comprenant un profil nominal de vitesse de l'aéronef comportant au moins deux segments de vol distincts pour chacun desquels sont définies une vitesse nominale de vol, une vitesse maximale de vol et une vitesse minimale de vol de l'aéronef. Ce procédé comporte une étape de détermination d'un profil effectif de vitesse de l'aéronef, comportant des segments de vol similaires à ceux du profil nominal de vitesse. Cette étape de détermination du profil effectif de vitesse comprend le calcul, pour chaque segment du profil effectif de vitesse, d'une vitesse de consigne égale à la somme de la vitesse nominale définie pour le segment correspondant du profil nominal de vitesse et d'un terme correctif. Le procédé comprend également une étape de commande d'un calculateur de guidage de l'aéronef pour guider l'aéronef selon le profil effectif de vitesse ainsi déterminé. Toutefois, dans ce procédé, le correction des valeurs de vitesse nominale est réalisée selon un ordre de priorité des segments. Il en résulte que le profil effectif de vitesse ne respecte pas une cohérence avec le profil nominal de vitesse, ce qui ne permet pas de respecter les différentes stratégies de vol définies pour les différents segments du plan de vol.

EXPOSE DE L'INVENTION :

La présente invention a pour objet de remédier aux inconvénients précités. Elle concerne un procédé d'aide au pilotage d'un aéronef, qui est destiné à aider au pilotage de l'aéronef en vue de respecter une contrainte d'heure de passage en un point de passage lors d'un vol de l'aéronef selon un plan de vol prédéterminé, ce plan de vol comprenant un profil nominal de vitesse de l'aéronef comportant au moins deux segments de vol distincts pour chacun desquels sont définies une vitesse nominale de vol, une vitesse maximale de vol et une vitesse minimale de vol de l'aéronef.

Ce procédé comporte les étapes suivantes mises en oeuvre par une unité de traitement d'un calculateur de gestion du vol de l'aéronef :

a) détermination d'un profil effectif de vitesse de l'aéronef, ce profil effectif de vitesse comportant des segments de vol similaires à ceux du profil nominal de vitesse, ladite détermination comprenant la sous-étape suivante :
a4) calcul, pour chaque segment du profil effectif de vitesse, d'une vitesse de consigne égale à la somme de la vitesse nominale définie pour le segment correspondant du profil nominal de vitesse et d'un terme correctif calculé pour le segment correspondant du profil nominal de vitesse,
b) commande d'un calculateur de guidage de l'aéronef pour guider l'aéronef selon le profil effectif de vitesse déterminé à l'étape a).

Ce procédé est remarquable en ce que l'étape a) comporte en outre la sous-étape suivante :
a3) calcul, pour chaque segment du profil nominal de vitesse, dudit terme correctif correspondant au produit d'un coefficient de correction par une différence entre d'une part l'une de la vitesse maximale ou de la vitesse minimale définies pour ce segment et, d'autre part la vitesse nominale correspondant à ce segment, le coefficient de correction étant un coefficient de correction commun à tous les segments du profil nominal de vitesse.

Ainsi, le profil effectif de vitesse permettant de respecter la contrainte d'heure de passage au point de passage est tel que la vitesse de consigne calculée pour chaque segment de vol correspond à la vitesse nominale de vol pour le segment de vol correspondant du profil nominal de vitesse, corrigée d'un terme correctif. Ce terme correctif correspond au produit du coefficient de correction commun à tous les segments par la différence entre une limite de vitesse (maximale ou minimale) correspondant à ce segment et la vitesse nominale correspondant à ce segment. Cette différence correspond à une marge entre la vitesse nominale et la limite de vitesse. Par conséquent, les vitesses des différents segments du profil effectif de vitesse sont basées sur les vitesses nominales des segments correspondants du profil nominal de vitesse et les termes correctifs correspondant aux différents segments permettent de corriger de façon homogène les vitesses des différents segments afin que les proportions entre les marges de vitesse correspondant aux différents segments du plan de vol effectif soient similaires aux proportions entre les marges de vitesse correspondant aux différents segments du plan de vol nominal. Cela permet d'obtenir un profil effectif de vitesse cohérent avec le profil nominal de vitesse du point de vue des vitesses respectives correspondant aux différents segments de vol.

Dans un mode de réalisation, l'étape a) comprend une sous-étape a1) de calcul d'une heure estimée de passage au point de passage en considérant que l'aéronef vole selon le profil nominal de vitesse et à l'étape a3), la différence entre d'une part l'une de la vitesse maximale ou de la vitesse minimale définies pour le segment et, d'autre part la vitesse nominale correspondant à ce segment est choisie égale à :

- la différence entre la vitesse maximale et la vitesse nominale définies pour ce segment lorsque ladite heure estimée de passage au point de passage est postérieure à la contrainte d'heure de passage ; et
- la différence entre la vitesse minimale et la vitesse nominale définies pour ce segment lorsque ladite heure estimée de passage au point de passage est antérieure à la contrainte d'heure de passage

De façon avantageuse, l'étape a) comprend en outre :

- une sous-étape a2), antérieure à la sous-étape a3), de sélection d'une valeur du coefficient de correction commun à tous les segments du profil de vitesse ; et
- une sous-étape a5) de calcul d'une heure estimée de passage au point de passage en considérant que l'aéronef vole selon le profil effectif de vitesse comprenant les valeurs de vitesse de consigne calculées à la sous-étape a4),

et les sous-étapes a2), a3), a4) et a5) sont mises en oeuvre de façon itérative jusqu'à ce que la différence entre l'heure estimée de passage au point de passage et la contrainte d'heure de passage soit inférieure à un seuil de durée prédéterminée.

De façon avantageuse encore, à la sous-étape a2), la valeur du coefficient de correction commun à tous les segments du profil de vitesse est sélectionnée en utilisant une méthode de dichotomie.

En particulier, la méthode de dichotomie est une méthode de dichotomie pondérée en fonction de la différence entre l'heure estimée de passage au point de passage et la contrainte d'heure de passage.

De façon préférée, la valeur du coefficient de correction est comprise entre 0 et 1.

L'invention est également relative à un système d'aide au pilotage d'un aéronef en vue de respecter une contrainte d'heure de passage en un point de passage lors d'un vol de l'aéronef selon un plan de vol prédéterminé, ce plan de vol comprenant un profil nominal de vitesse de l'aéronef comportant au moins deux segments de vol distincts pour chacun desquels sont définies une vitesse nominale de vol, une vitesse maximale de vol et une vitesse minimale de vol de l'aéronef. Ce système comporte :

- un calculateur de gestion de vol qui comprend une unité de traitement configurée pour déterminer un profil effectif de vitesse de l'aéronef, ce profil effectif de vitesse comportant des segments de vol similaires à ceux du profil nominal de vitesse, la détermination du profil effectif de vitesse comprenant le calcul, pour chaque segment du profil effectif de vitesse, d'une vitesse de consigne égale à la somme de la vitesse nominale définie pour le segment correspondant du profil nominal de vitesse et d'un terme correctif calculé pour le segment correspondant du profil nominal de vitesse,
- un calculateur de guidage de l'aéronef configuré pour guider l'aéronef selon le profil effectif de vitesse déterminé par l'unité de traitement du calculateur de gestion de vol.

Ce système est remarquable en ce que la détermination du profil effectif de vitesse par le calculateur de gestion de vol comprend en outre le calcul, pour chaque segment du profil nominal de vitesse, dudit terme correctif correspondant au produit d'un coefficient de correction par une différence entre d'une part l'une de la vitesse maximale ou de la vitesse minimale définies pour ce segment et, d'autre part la vitesse nominale correspondant à ce segment, le coefficient de correction étant un coefficient de correction commun à tous les segments du profil nominal de vitesse.

L'invention concerne aussi un aéronef comportant un tel système d'aide au pilotage.

DESCRIPTION DETAILLEE :

L'invention sera mieux comprise à la lecture de la description qui suit et à l'examen des figures annexées.
La figure 1 représente un aéronef comprenant un système d'aide au pilotage conforme à l'invention ;
La figure 2, déjà décrite, illustre un profil de vitesse nominal d'un plan de vol de l'aéronef ;
La figure 3, déjà décrite, illustre un profil de vitesse selon l'art antérieur, permettant de respecter une contrainte RTA ;
La figure 4 illustre un profil de vitesse déterminé par un système d'aide au pilotage d'un aéronef, conforme à l'invention ;
La figure 5 est un schéma synoptique d'un système d'aide au pilotage d'un aéronef, conforme à l'invention.

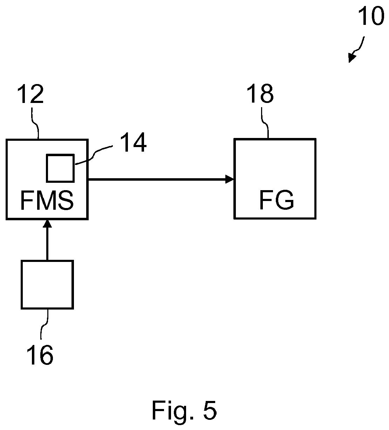

Le système 10 représenté schématiquement sur la figure 5 est conforme à un mode de réalisation de l'invention. Il est embarqué à bord d'un aéronef 1 tel que représenté sur la figure 1, en particulier un avion de transport civil ou un avion de transport militaire, en vue d'aider cet aéronef à voler selon un plan de vol, en respectant une contrainte d'heure de passage RTA en un point de passage du plan de vol. Ce système est par exemple installé dans une baie avionique 2 de l'aéronef. Le système 10 comporte un calculateur 12 de gestion du vol de l'aéronef, en particulier un calculateur de type FMS (« Flight Management System » en anglais). Ce calculateur de gestion du vol comprend une unité de traitement 14. Il comprend également une mémoire non représentée, prévue pour enregistrer au moins un plan de vol de l'aéronef. Le calculateur de gestion de vol 12 est relié en entrée à une interface homme-machine 16, située de préférence dans le cockpit 3 de l'aéronef. Cette interface homme-machine correspond en particulier à un ensemble comprenant un écran, un clavier et/ou une unité de pointage, par exemple une unité de type MCDU (« Multipurpose Control and Display Unit » en anglais). Une sortie du calculateur 12 de gestion de vol est reliée à une entrée d'un calculateur 18 de guidage de l'aéronef, en particulier un calculateur de type FG (« Flight Guidance computer » en anglais). Ce calculateur de guidage est par exemple prévu pour guider l'aéronef selon un mode de guidage automatique (lorsqu'un pilote automatique de l'aéronef est engagé) ou selon un mode de guidage manuel, par exemple au moyen d'un directeur de vol.

En fonctionnement, avant un vol de l'aéronef, un pilote de l'aéronef définit un plan de vol nominal pour ce vol de l'aéronef et il entre ce plan de vol dans le calculateur 12 de gestion de vol au moyen de l'interface homme-machine 16. Lorsque cela est approprié pour le vol prévu de l'aéronef, ce plan de vol nominal comprend un profil nominal de vitesse de l'aéronef comportant au moins deux segments de vol distincts pour chacun desquels sont définies une vitesse nominale de vol, une vitesse maximale de vol et une vitesse minimale de vol de l'aéronef. Le calculateur de gestion de vol enregistre le plan de vol nominal et le profil nominal de vitesse dans sa mémoire. Un tel profil nominal de vitesse, par exemple le profil nominal de vitesse 20 illustré sur la figure 2 déjà décrite, permet de définir différentes stratégies de vol pour les différents segments de vol.

Pendant le vol de l'aéronef, le calculateur de gestion de vol commande le calculateur de guidage 18 de l'aéronef pour guider l'aéronef selon le plan de vol nominal et le profil nominal de vitesse. Parfois, le contrôle aérien peut être amené à envoyer, au pilote de l'aéronef, une contrainte d'heure de passage RTA associée à un point de passage du plan de vol. Si le pilote approuve cette contrainte, il l'entre dans le calculateur de gestion de vol au moyen de l'interface homme-machine 16. Le calculateur de gestion de vol 12 détermine alors un profil effectif de vitesse 21 de l'aéronef permettant de respecter la contrainte RTA, puis il commande le calculateur de guidage 18 de l'aéronef pour guider l'aéronef selon le profil effectif de vitesse ainsi déterminé. Ce profil effectif de vitesse comporte des segments de vol similaires à ceux du profil nominal de vitesse. Sa détermination par le calculateur 12 de gestion de vol comprend les étapes suivantes :

a3) calcul, pour chaque segment du profil nominal de vitesse, d'un terme correctif correspondant au produit d'un coefficient de correction par une différence entre d'une part l'une de la vitesse maximale ou de la vitesse minimale définies pour ce segment et, d'autre part la vitesse nominale correspondant à ce segment, le coefficient de correction étant un coefficient de correction commun à tous les segments du profil nominal de vitesse ; et
a4) calcul, pour chaque segment du profil effectif de vitesse, d'une vitesse de consigne égale à la somme de la vitesse nominale définie pour le segment correspondant du profil nominal de vitesse et du terme correctif calculé pour le segment correspondant du profil nominal de vitesse.

De façon particulière, dans une étape a1) antérieure à l'étape a3), le calculateur de gestion de vol 12 calcule une heure estimée de passage ETA au point de passage en considérant que l'aéronef vole selon le profil nominal de vitesse. Ensuite, à l'étape a3), la différence entre d'une part l'une de la vitesse maximale ou de la vitesse minimale définies pour le segment et, d'autre part la vitesse nominale correspondant à ce segment est choisie égale à :

- la différence entre la vitesse maximale et la vitesse nominale définies pour ce segment lorsque ladite heure estimée de passage au point de passage est postérieure à la contrainte d'heure de passage RTA ; et

- la différence entre la vitesse minimale et la vitesse nominale définies pour ce segment lorsque ladite heure estimée de passage au point de passage est antérieure à la contrainte d'heure de passage RTA.

Dans l'exemple illustré sur la figure 2, dans l'hypothèse où le pilote reçoit et entre dans le calculateur de gestion de vol une contrainte RTA égale à 14h00 pour le point de passage à la fin du segment S5, le calculateur de gestion de vol calcule l'heure estimée de passage ETA à ce point de passage. Cette heure estimée de passage correspond à l'instant t5 illustré sur la figure. Comme cela a été indiqué antérieurement, cet instant t5 correspondant au passage de l'aéronef à la fin du segment S5 est égal à 14h04. Par conséquent, l'heure estimée de passage ETA est postérieure à la contrainte d'heure de passage RTA. Il en résulte qu'à l'étape a3), pour chaque segment du profil de vitesse, le terme correctif correspond au produit du coefficient de correction par une différence entre la vitesse maximale définie pour ce segment et la vitesse nominale correspondant à ce segment.

De façon avantageuse, dans une étape a2) postérieure à l'étape a1) et antérieure à l'étape a3, le calculateur de gestion de vol sélectionne une valeur du coefficient de correction commun à tous les segments du profil de vitesse et dans une étape a5) postérieure à l'étape a4), il calcule une heure estimée de passage ETA au point de passage en considérant que l'aéronef vole selon le profil effectif de vitesse comprenant les valeurs de vitesse de consigne calculées à l'étape a4). Le calculateur de gestion de vol répète les étapes a2), a3), a4) et a5), en choisissant à chaque fois une nouvelle valeur du coefficient de correction à l'étape a2, jusqu'à ce que la différence entre l'heure estimée de passage ETA au point de passage et la contrainte d'heure de passage RTA soit inférieure à un seuil de durée prédéterminée. Ce seuil de durée est choisi de telle façon que ladite différence entre l'heure estimée de passage ETA au point de passage et la contrainte d'heure de passage RTA est suffisamment faible pour que la contrainte RTA soit considérée comme satisfaite. Ce seuil peut par exemple être choisi égal à 10 secondes.

Dans un mode particulier de réalisation, à l'étape a2), la valeur du coefficient de correction commun à tous les segments du profil de vitesse est sélectionnée en utilisant une méthode de dichotomie. De façon avantageuse, la méthode de dichotomie est pondérée en fonction de la différence entre l'heure estimée de passage ETA au point de passage et la contrainte d'heure de passage RTA, ce qui permet de réduire le nombre d'itérations des étapes a2) à a5) nécessaires pour déterminer le coefficient de correction.

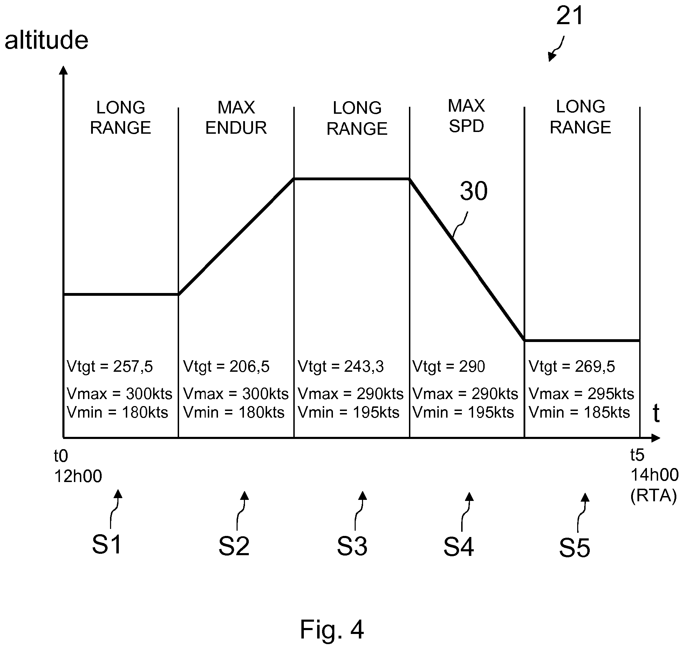

Dans le cas particulier de l'exemple considéré préalablement, comme indiqué précédemment, pour chaque segment du profil de vitesse, le terme correctif correspond au produit du coefficient de correction par une différence entre la vitesse maximale définie pour ce segment et la vitesse nominale correspondant à ce segment. Compte tenu des valeurs de vitesse maximale et de vitesse nominale pour les différents segments, le calculateur de gestion de vol détermine une valeur du coefficient de correction égale à 0,15. Par conséquent, pour chaque segment du profil de vitesse, la vitesse de consigne Vtgt calculée par le calculateur de gestion de vol est égale à $Vtgt = Vnom + 0,15 (Vmax - Vnom)$. Comme illustré par la figure 4, les vitesses de consigne du profil effectif de vitesse 21 pour les segments S1 à S5 sont donc égales à :

pour le segment S1 : Vtgt = 257,5kts
pour le segment S2 : Vtgt = 206,5kts
pour le segment S3 : Vtgt = 243,3kts
pour le segment S4 : Vtgt = 290,0kts
pour le segment S5 : Vtgt = 269,5kts

Ainsi, les valeurs relatives des vitesses correspondant aux différents segments S1 à S5 sont sensiblement conservées par rapport au profil de vitesse nominal.
Compte tenu de la formule utilisée pour calculer les vitesses de consigne, la valeur du coefficient de correction est comprise entre 0 et 1.
Selon une première alternative, le profil nominal de vitesse dont les valeurs nominale, maximale et minimale de vitesse sont utilisées pour le calcul des vitesses de consigne du profil effectif de vitesse, correspond au profil nominal de vitesse du plan de vol optimal défini avant le vol de l'aéronef. Le calculateur de gestion de vol mémorise alors d'une part le plan de vol optimal et son profil de vitesse optimale et d'autre part un plan de vol effectif et son profil effectif de vitesse. Avant le début du vol, le calculateur 12 de gestion de vol recopie le plan de vol optimal et son profil de vitesse optimale vers le plan de vol effectif et son profil effectif de vitesse et il commande le calculateur de guidage 18 en fonction du plan de vol effectif et du profil effectif de vitesse. Si, pendant le vol de l'aéronef, une contrainte RTA est entrée par le pilote dans le calculateur de gestion de vol, le calculateur de gestion de vol calcule les valeurs de vitesse de consigne du profil effectif de vitesse comme indiqué précédemment (à l'étape a4) et le profil effectif de vitesse utilisé pour le guidage de l'aéronef est ainsi modifié pour tenir compte de la contrainte RTA. Si une nouvelle contrainte RTA est entrée dans le calculateur de gestion de vol pendant le même vol de l'aéronef, de nouvelles valeurs de vitesse de consigne du profil effectif de vitesse sont calculées en fonction des vitesses nominale, maximale et minimale du profil nominal de vitesse défini avant le vol et enregistré en mémoire du calculateur de gestion de vol.
Selon une deuxième alternative, le profil nominal de vitesse dont les valeurs nominale, maximale et minimale de vitesse sont utilisées pour le calcul des vitesses de consigne du profil effectif de vitesse, correspond à un profil de vitesse d'un plan de vol courant de l'aéronef. Le calculateur de gestion de vol mémorise alors un seul plan de vol et son profil de vitesse. Avant le début du vol, lors de l'entrée par le pilote du plan de vol optimal et son profil de vitesse optimale dans le calculateur 12 de gestion de vol, ce plan de vol optimal et son profil de vitesse optimale sont mémorisés directement dans la mémoire correspondant au plan de vol courant et à son profil de vitesse. Le calculateur 12 de gestion de vol commande le calculateur de guidage 18 en fonction du plan de vol courant et de son profil effectif de vitesse. Si, pendant le vol de l'aéronef, une première contrainte RTA est entrée par le pilote dans le calculateur de gestion de vol, le calculateur de gestion de vol calcule les valeurs de vitesse de consigne du profil effectif de vitesse comme indiqué précédemment à l'étape a4) en considérant le plan de vol optimal et son profil de vitesse optimal comme correspondant au plan de vol courant et à son profil de vitesse. Ce profil de vitesse du plan de vol courant correspond alors au profil nominal de vitesse mémorisé avant le début du vol. Le profil effectif de vitesse déterminé par le calculateur de gestion de vol est recopié dans le profil de vitesse du plan de vol courant de façon à permettre le guidage de l'aéronef selon ce profil effectif de vitesse. Si une nouvelle contrainte RTA est entrée dans le calculateur de gestion de vol pendant le même vol de l'aéronef, de nouvelles valeurs de vitesse de consigne du profil effectif de vitesse sont calculées en considérant encore le plan de vol optimal et son profil de vitesse optimal comme correspondant au plan de vol courant et à son profil de vitesse. Ce profil de vitesse correspond alors au profil de vitesse effectif calculé suite à la réception de la contrainte RTA précédente. Cela est acceptable, étant donné que les valeurs relatives des vitesses de consigne correspondant aux différents segments de vol sont sensiblement conservées lors du calcul du profil de vitesse effectif à partir du profil de vitesse nominal.

**Revendications**

1. Procédé d'aide au pilotage d'un aéronef (1) en vue de respecter une contrainte d'heure de passage (RTA) en un point de passage lors d'un vol de l'aéronef selon un plan de vol prédéterminé, ce plan de vol comprenant un profil nominal de vitesse (20) de l'aéronef comportant au moins deux segments de vol (S1 ... S5) distincts pour chacun desquels sont définies une vitesse nominale de vol (Vnom), une vitesse maximale de vol (Vmax) et une vitesse minimale de vol (Vmin) de l'aéronef,
le procédé comportant les étapes suivantes mises en oeuvre par une unité de traitement (14) d'un calculateur (12) de gestion du vol de l'aéronef :

   a) détermination d'un profil effectif de vitesse

(21) de l'aéronef, ce profil effectif de vitesse comportant des segments de vol (S1 ... S5) similaires à ceux du profil nominal de vitesse (20), ladite détermination comprenant la sous-étape suivante :
   a4) calcul, pour chaque segment du profil effectif de vitesse (21), d'une vitesse de consigne (Vtgt) égale à la somme de la vitesse nominale (Vnom) définie pour le segment correspondant du profil nominal de vitesse (20) et d'un terme correctif calculé pour le segment correspondant du profil nominal de vitesse,
   b) commande d'un calculateur (18) de guidage de l'aéronef pour guider l'aéronef selon le profil effectif de vitesse (21) déterminé à l'étape a), **caractérisé en ce que** l'étape a) comporte en outre la sous-étape suivante :
   a3) calcul, pour chaque segment du profil nominal de vitesse, dudit terme correctif correspondant au produit d'un coefficient de correction par une différence entre d'une part l'une de la vitesse maximale (Vmax) ou de la vitesse minimale (Vmin) définies pour ce segment et, d'autre part la vitesse nominale (Vnom) correspondant à ce segment, le coefficient de correction étant un coefficient de correction commun à tous les segments (S1 ... S5) du profil nominal de vitesse (20).

2. Procédé selon la revendication 1 **caractérisé en ce que** l'étape a) comprend une sous-étape a1) de calcul d'une heure estimée de passage (ETA) au point de passage en considérant que l'aéronef vole selon le profil nominal de vitesse (20) et à l'étape a3), la différence entre d'une part l'une de la vitesse maximale (Vmax) ou de la vitesse minimale (Vmin) définies pour le segment et, d'autre part la vitesse nominale (Vnom) correspondant à ce segment est choisie égale à :

   - la différence entre la vitesse maximale (Vmax) et la vitesse nominale (Vnom) définies pour ce segment lorsque ladite heure estimée de passage (ETA) au point de passage est postérieure à la contrainte d'heure de passage (RTA) ; et
   - la différence entre la vitesse minimale (Vmin) et la vitesse nominale (Vnom) définies pour ce segment lorsque ladite heure estimée de passage (ETA) au point de passage est antérieure à la contrainte d'heure de passage (RTA).

3. Procédé selon la revendication 2 **caractérisé en ce que** l'étape a) comprend en outre :

   - une sous-étape a2), antérieure à la sous-étape a3), de sélection d'une valeur du coefficient de correction commun à tous les segments du profil de vitesse ; et

- une sous-étape a5) de calcul d'une heure estimée de passage (ETA) au point de passage en considérant que l'aéronef vole selon le profil effectif de vitesse (21) comprenant les valeurs de vitesse de consigne (Vtgt) calculées à la sous-étape a4),

et les sous-étapes a2), a3), a4) et a5) sont mises en oeuvre de façon itérative jusqu'à ce que la différence entre l'heure estimée de passage (ETA) au point de passage et la contrainte d'heure de passage (RTA) soit inférieure à un seuil de durée prédéterminée.

4. Procédé selon la revendication 3 **caractérisé en ce qu'**à la sous-étape a2), la valeur du coefficient de correction commun à tous les segments du profil de vitesse est sélectionnée en utilisant une méthode de dichotomie.

5. Procédé selon la revendication 4 **caractérisé en ce que** la méthode de dichotomie est une méthode de dichotomie pondérée en fonction de la différence entre l'heure estimée de passage (ETA) au point de passage et la contrainte d'heure de passage (RTA).

6. Procédé selon l'une quelconque des revendications précédentes **caractérisé en ce que** la valeur du coefficient de correction est comprise entre 0 et 1.

7. Système (10) d'aide au pilotage d'un aéronef (1) en vue de respecter une contrainte d'heure de passage (RTA) en un point de passage lors d'un vol de l'aéronef selon un plan de vol prédéterminé, ce plan de vol comprenant un profil nominal de vitesse (20) de l'aéronef comportant au moins deux segments de vol (S1 ... S5) distincts pour chacun desquels sont définies une vitesse nominale de vol (Vnom), une vitesse maximale de vol (Vmax) et une vitesse minimale de vol (Vmin) de l'aéronef, le système comportant :

- un calculateur (12) de gestion de vol qui comprend une unité de traitement (14) configurée pour déterminer un profil effectif de vitesse (21) de l'aéronef, ce profil effectif de vitesse comportant des segments de vol (S1 ... S5) similaires à ceux du profil nominal de vitesse (20), la détermination du profil effectif de vitesse comprenant le calcul, pour chaque segment du profil effectif de vitesse (21), d'une vitesse de consigne (Vtgt) égale à la somme de la vitesse nominale (Vnom) définie pour le segment correspondant du profil nominal de vitesse (20) et d'un terme correctif calculé pour le segment correspondant du profil nominal de vitesse,
- un calculateur (18) de guidage de l'aéronef configuré pour guider l'aéronef selon le profil effectif de vitesse (21) déterminé par l'unité de traitement (14) du calculateur (12) de gestion de vol,

**caractérisé en ce que** la détermination du profil effectif de vitesse par le calculateur (12) de gestion de vol comprend en outre le calcul, pour chaque segment du profil nominal de vitesse, dudit terme correctif correspondant au produit d'un coefficient de correction par une différence entre d'une part l'une de la vitesse maximale (Vmax) ou de la vitesse minimale (Vmin) définies pour ce segment et, d'autre part la vitesse nominale (Vnom) correspondant à ce segment, le coefficient de correction étant un coefficient de correction commun à tous les segments (S1 ... S5) du profil nominal de vitesse (20).

8. Aéronef (1) comportant un système (10) d'aide au pilotage selon la revendication 7.

Fig. 1

altitude

20

| LONG RANGE | MAX ENDUR | LONG RANGE | MAX SPD | LONG RANGE |
|---|---|---|---|---|

30

| Vnom = 250kts | Vnom = 190kts | Vnom = 235kts | Vnom = 290kts | Vnom = 265kts |
| Vmax = 300kts | Vmax = 300kts | Vmax = 290kts | Vmax = 290kts | Vmax = 295kts |
| Vmin = 180kts | Vmin = 180kts | Vmin = 195kts | Vmin = 195kts | Vmin = 185kts |

t

t0
12h00

t5
14h04
(ETA)

S1    S2    S3    S4    S5

Fig. 2

**altitude**

| LONG RANGE | MAX ENDUR | LONG RANGE | MAX SPD | LONG RANGE |
|---|---|---|---|---|
| Vcalc = 249,6 | Vcalc = 249,6 | Vcalc = 250,1 | Vcalc = 250,1 | Vcalc = 248,8 |
| Vmax = 300kts | Vmax = 300kts | Vmax = 290kts | Vmax = 290kts | Vmax = 295kts |
| Vmin = 180kts | Vmin = 180kts | Vmin = 195kts | Vmin = 195kts | Vmin = 185kts |

30

t

t0
12h00

t5
14h00
(RTA)

S1    S2    S3    S4    S5

Fig. 3

altitude

21

| LONG RANGE | MAX ENDUR | LONG RANGE | MAX SPD | LONG RANGE |
|---|---|---|---|---|

30

| Vtgt = 257,5 | Vtgt = 206,5 | Vtgt = 243,3 | Vtgt = 290 | Vtgt = 269,5 |
| Vmax = 300kts | Vmax = 300kts | Vmax = 290kts | Vmax = 290kts | Vmax = 295kts |
| Vmin = 180kts | Vmin = 180kts | Vmin = 195kts | Vmin = 195kts | Vmin = 185kts |

t

t0
12h00

t5
14h00
(RTA)

S1    S2    S3    S4    S5

Fig. 4

10

12                              18

14

FMS  ⟶  FG

16

Fig. 5

# EP 3 561 626 A1

**Europäisches Patentamt**

**European Patent Office**

**Office européen des brevets**

## RAPPORT DE RECHERCHE EUROPEENNE

Numéro de la demande

EP 19 16 8157

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 232 292 A1 (HONEYWELL INT INC [US]) 18 octobre 2017 (2017-10-18) * alinéa [0010] - alinéa [0046]; figures 1-5 * | 1-8 | INV. G05D1/00 G01C21/20 G05D1/10 |
| A | EP 2 426 567 A1 (HONEYWELL INT INC [US]) 7 mars 2012 (2012-03-07) * alinéa [0030] - alinéa [0043] * | 1-8 | |
| A | EP 2 993 543 A1 (HONEYWELL INT INC [US]) 9 mars 2016 (2016-03-09) * alinéa [0019] - alinéa [0030] * | 1-8 | |

**DOMAINES TECHNIQUES RECHERCHES (IPC)**

G05D
G01C

Le présent rapport a été établi pour toutes les revendications

| Lieu de la recherche | Date d'achèvement de la recherche | Examinateur |
|---|---|---|
| Munich | 4 septembre 2019 | Thomann, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................

& : membre de la même famille, document correspondant

EPO FORM 1503 03.82 (P04C02)

# EP 3 561 626 A1

## ANNEXE AU RAPPORT DE RECHERCHE EUROPEENNE
## RELATIF A LA DEMANDE DE BREVET EUROPEEN NO.

EP 19 16 8157

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-09-2019

| Document brevet cité au rapport de recherche | | Date de publication | Membre(s) de la famille de brevet(s) | | Date de publication |
|---|---|---|---|---|---|
| EP 3232292 | A1 | 18-10-2017 | EP | 3232292 A1 | 18-10-2017 |
| | | | US | 9540005 B1 | 10-01-2017 |
| EP 2426567 | A1 | 07-03-2012 | EP | 2426567 A1 | 07-03-2012 |
| | | | US | 2012059535 A1 | 08-03-2012 |
| EP 2993543 | A1 | 09-03-2016 | CN | 105405322 A | 16-03-2016 |
| | | | EP | 2993543 A1 | 09-03-2016 |
| | | | US | 2016069688 A1 | 10-03-2016 |

EPO FORM P0460

## RÉFÉRENCES CITÉES DANS LA DESCRIPTION

### Documents brevets cités dans la description

- US 5121325 A

- EP 3232292 A1